# Europäisches Patentamt

# European Patent Office

# Office européen des brevets

(19)

(11) Veröffentlichungsnummer: **0 087 419**
**B1**

(12) ## EUROPÄISCHE PATENTSCHRIFT

(45) Veröffentlichungstag der Patentschrift:
**11.06.86**

(21) Anmeldenummer: **82900243.5**

(22) Anmeldetag: **18.12.81**

(86) Internationale Anmeldenummer:
**PCT/DE 81/00228**

(87) Internationale Veröffentlichungsnummer:
**WO 82/03458 (14.10.82 Gazette 82/25)**

(51) Int. Cl.⁴: **G 01 L 1/22**, H 01 C 17/12,
**H 01 L 27/01**

(54) **DÜNNSCHICHT-DEHNUNGSMESSSTREIFEN UND VERFAHREN ZU SEINER HERSTELLUNG.**

(30) Priorität: **04.04.81 DE 3113745**

(43) Veröffentlichungstag der Anmeldung:
**07.09.83 Patentblatt 83/36**

(45) Bekanntmachung des Hinweises auf die Patenterteilung:
**11.06.86 Patentblatt 86/24**

(84) Benannte Vertragsstaaten:
**CH DE FR LI NL**

(56) Entgegenhaltungen:
**EP - A - 0 016 251**
**DE - A - 1 490 927**
**DE - B - 2 608 381**
**FR - A - 2 057 215**
**FR - A - 2 440 618**
**GB - A - 1 067 475**

**Die Akte enthält technische Angaben, die nach dem Eingang der Anmeldung eingereicht wurden und die nicht in dieser Patentschrift enthalten sind.**

(73) Patentinhaber: **ROBERT BOSCH GMBH, Postfach 50, D-7000 Stuttgart 1 (DE)**

(72) Erfinder: **BURGER, Kurt, Lehenstrasse 30, D-7251 Friolzheim (DE)**
Erfinder: **GRUNER, Heiko, Kehlenstrasse 1014, CH (CH)**

## Beschreibung

Stand der Technik

Die Erfindung geht aus von einem Dünnschicht-Dehnungsmeßstreifen nach der Gattung des Anspruches. Derartige Dehnungsmeßstreifen sind bekannt und zwar sowohl in herkömmlicher Bauweise mit drahtförmigen oder folienartigen Widerstandselementen wie auch in Dünnschichttechnik. Als elastisch verformbare Federelemente werden dabei in bekannter Weise einseitig oder zentral auslenkbare, in Längsrichtung dehnbare oder andersartig verformbare Federelemente in Verbindung mit wenigstens einem dehnungsempfindlichen Widerstand verwendet. Zur Erhöhung der Meßgenauigkeit sind häufig vier dehnungsempfindliche Widerstände zu einer Wheatstone-Brücke zusammengeschaltet.

Aus der FR-A-20 57 215 ist ein Dünnschicht-Dehnungsmeßstreifen bekannt, bei dem verschiedene Widerstände und niederohmige Verbindungen aus dem gleichen Widerstandsmaterial im Vakuum auf eine Federplatte aufgestäubt sind. Bei einer derartigen Anordnung ist der elektrische Widerstand der Verbindungsleitungen und/ oder der Anschlußleiterbahnen jedoch relativ hoch.

Dünnschicht-Widerstandsanordnungen, welche durch Aufstäuben hergestellt werden, sind beispielsweise aus der EP-A-16 251 bekannt. Die Veröffentlichung beschreibt temperaturabhängige Widerstände aus Tantal und Nickel und temperaturunabhängige Widerstände aus Tantal.

Weiterhin ist es bekannt, die Widerstandselemente der Dehnungsmeßstreifen aus einem Material oder einer Materialkombination mit kleinem Temperaturkoeffizienten des elektrischen Widerstandes herzustellen, um Meßfehler durch Temperaturschwankungen auszuschalten, welche sich in gleicher Weise wie Auslenkungen des Elementes bemerkbar machen. In konventioneller Technik sind bereits Dehnungsmeßstreifen verwendet worden, bei denen sowohl die Widerstandselemente als auch ein Teil der Zuleitungen aus Konstantan hergestellt waren, wobei sich jedoch Verluste des Meßsignals auf den Zuleitungen ergaben.

Vorteile der Erfindung

Der erfindungsgemäße Dünnschicht-Dehnungsmeßstreifen mit den kennzeichnenden Merkmalen des Anspruchs hat demgegenüber eine Vielzahl entscheidender Vorteile. Insbesondere vermeidet man weitestgehend die Temperaturfehler, welche sich durch unterschiedliche Temperaturkoeffizienten des elektrischen Widerstandes der Zuleitungen und der Widerstandsbereiche einstellen. Hierbei braucht praktisch kein höherer Leiterbahnwiderstand in Kauf genommen zu werden und somit auch keine Verringerung der Meßempfindlichkeit des Widerstandes oder der Brücke. Da sowohl die niederohmigen Verbindungen zwischen den verschiedenen Widerstandsbereichen als auch die zugehörigen Anschlußleitungen aus dem gleichen Material herstellbar sind, können beide Fehlerquellen ausgeschaltet werden. Durch Herstellung der verschiedenen Elemente mittels thermischer Verdampfung oder Kathodenzerstäubung ergibt sich eine Lösung, welche speziell auf Dünnschichttechnik zugeschnitten ist und in eine andere Dünnschicht-Schaltung auf einem gleichen Substrat ohne Schwierigkeiten integrierbar ist. Der Herstellungsprozeß ist besonders einfach. Der Aufbau der Anschlußleiterbahnen für die äußeren elektrischen Anschlüsse läßt eine beliebige Gestaltung derselben zu, so daß auch die Variationsmöglichkeit der Kontaktierungsart des Dünnschicht-Dehnungsmeßstreifens erhalten bleibt, z.B. für Anschlüsse durch Löten, Bonden oder Schweißen entsprechend den Einsatzbedingungen der Meßbrücke.

Durch den erfindungsgemäßen Vorschlag ergibt sich eine Anordnung aus einem haftfesten, verzinn- und/oder verbleibaren und/oder galvanisch verstärkbaren Metallisierungssystem für Dünnschicht-Dehnungsmeßstreifen und Dünnschicht-Schaltungen im Rahmen einer besonders rationellen Fertigung. Teure Vorbehandlungen der Oberflächen der elastisch verformbaren Federelemente entfallen, insbesondere bei Verwendung dünner, hochohmiger, in zwei getrennten Verfahrensabschnitten aufgedruckten Glasisolationsschichten. Durch den Zweifachdruck entsteht eine porenfreie Isolationsschicht, wobei die Einzelschichten vorteilhafterweise jeweils für sich eingebrannt werden. Dieser Einbrennvorgang kann ohne zusätzlichen Aufwand dazu genutzt werden, z.B. CuBe-Federelement-Substrate im gleichen Vorgang zu härten.

Zeichnung

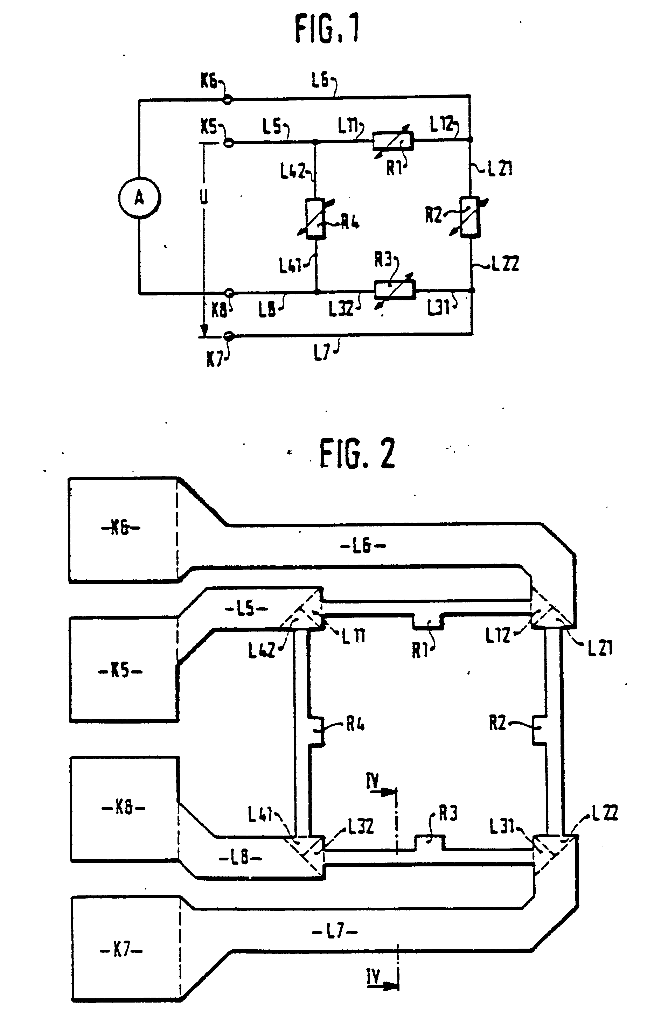

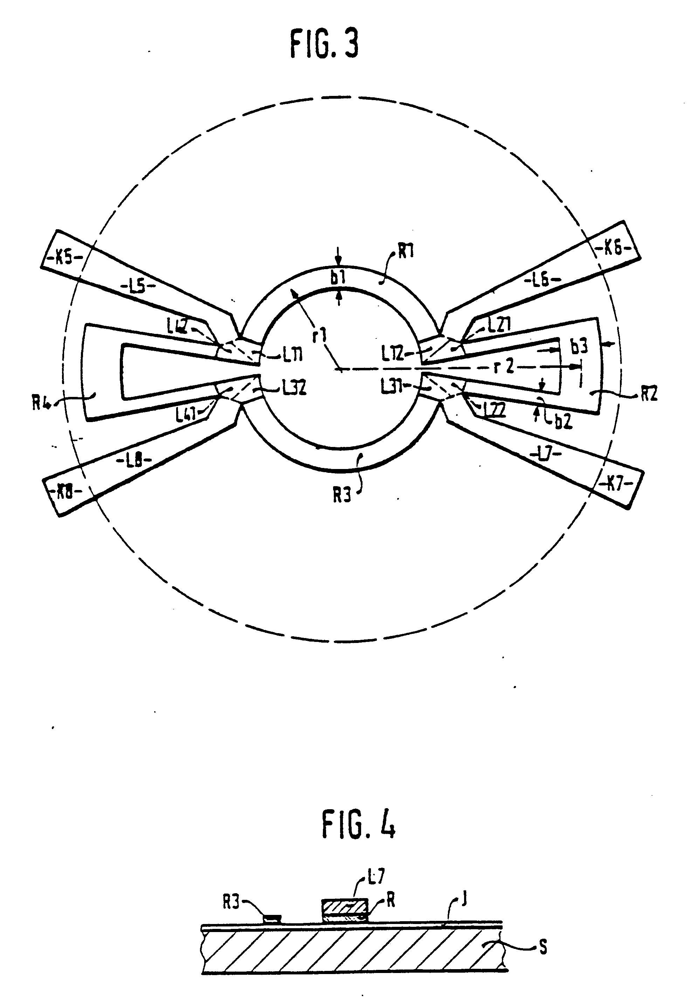

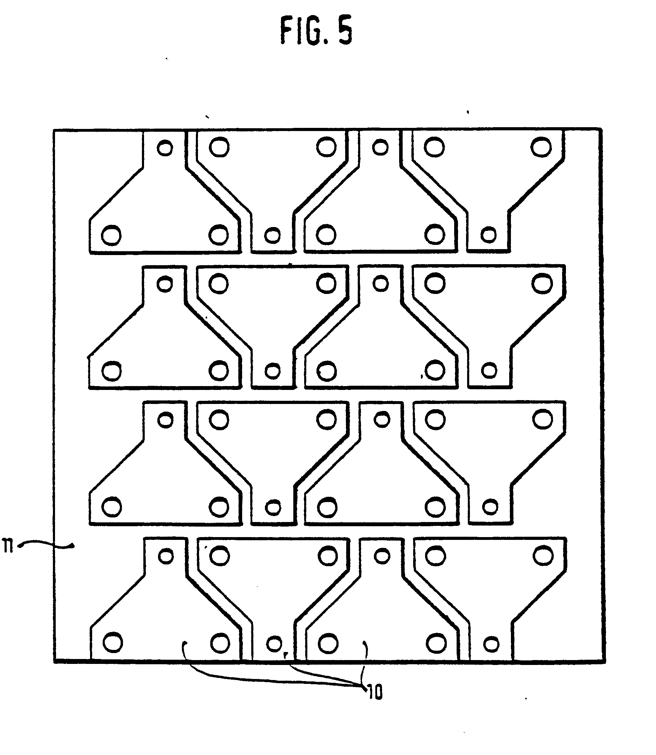

Zwei Ausführungsbeispiele der Erfindung sind in der Zeichnung schematisch dargestellt und in der nachfolgenden Beschreibung näher erläutert. Es zeigen Figur 1 das Schaltungsprinzip einer Wheatstone-Brücke mit Dehnungsmeßstreifen, Figur 2 eine einseitig auslenkbare Anordnung einer Dünnschicht-Dehnungsmeßstreifen-Brücke, Figur 3 eine zentral auslenkbare Anordnung auf einem membranartigem Federelement, Figur 4 einen Schnitt nach der Linie IV-IV in Figur 2 und Figur 5 eine Anordnung mit einer Vielzahl von Federelementen mit Dünnschicht-Meßstreifen vor ihrer Zerteilung in die Einzelelemente.

Beschreibung der Ausführungsbeispiele

Figur 1 zeigt eine Brückenschaltung mit vier dehnungsempfindlichen Widerständen R1, R2, R3 und R4. Diese Widerstände sind über kurze, niederohmige Verbindungen L11, L12, L21, L22, L31, L32, L41 und L42 elektrisch miteinander verbunden. Von den Verbindungspunkten führen Anschlußleiterbahnen L5, L6, L7 und L8 zu äußeren Kontaktierungspunkten K5, K6, K7 und K8. Die Speisespannung U wird an die Punkte K5 und K7 angelegt, das Meßsignal wird in der Brückendiagonale an den Kontaktierungsstellen K6 und K8 abgenommen.

Die Widerstände R1 bis R4 bilden die Dünnschicht-Dehnungsmeßstreifen, die in einer Wheatstone-Brücke angeordnet werden; selbstverständlich kann eine Messung auch mit einem einzelnen Widerstand R durchgeführt werden, wobei das Meßsignal als Spannungsänderung an diesem Widerstand abgegriffen wird. Mit der erfindungsgemäßen Anordnung läßt sich insbesondere eine in eine Dünnschichtschaltung integrierbare Präzisions-Dünnschicht-Dehnungsmeßanordnung herstellen, welche zur Messung von z.B. Kraft, Druck, Weg, Gewicht oder Beschleunigung verwendbar ist. Um das Meßsignal nicht zu schwächen, sollen die verschiedenen Widerstände R1 bis R4 niederohmig miteinander verbunden sein und auch die Anschlußleiterbahnen L5 bis L8 zu den Kontaktierungsstellen K5 bis K8 sollen möglichst niederohmig sein. Neben der Forderung nach niederohmigen Verbindungen steht jedoch die sehr wesentliche Forderung, daß die elektrischen Verbindungen aus einem Material oder einer Materialkombination mit einem Temperaturkoeffizienten des elektrischen Widerstandes bestehen sollen, der sich von dem Temperaturkoeffizienten der Widerstandsbereiche praktisch nicht unterscheidet, damit sich bei Temperaturschwankungen kein Meßfehler ergibt, welcher einer scheinbaren Auslenkung der Federelemente entsprechen würde. Das ist besonders dann der Fall, wenn längere Leiterbahnen notwendig sind, weil z.B. aus Haftungsgründen nicht unmittelbar im gedehnten Federelementbereich die Kontaktierung der Brücke erfolgen kann. Zu diesem Zweck sind nicht nur die Widerstände R1 bis R4 sondern auch die niederohmigen Verbindungen L11 bis L42 und die Anschlußleiterbahnen L5 bis L8 aus Widerstandsmaterial hergestellt, welches jedoch von dem Widerstandsmaterial der eigentlichen Widerstände R1 bis R4 verschieden ist. Alle sonst üblichenn Dünnschichtkontakt-Metallisierungen wie Kupfer, Nickel oder Gold oder auch Schichtkombinationen von gut leitfähigen Metallen eignen sich nicht für Präzisions-Dünnschicht-Dehnungsmeßstreifen, da sie Temperaturkoeffizienten besitzen, welche um den Faktor 1000 größer sind als der Temperaturkoeffizient der Widerstandsschicht, so daß sich nicht vernachlässigbare Fehler ergeben.

Figur 2 zeigt ein erstes Ausführungsbeispiel der Erfindung, wobei sowohl die niederohmigen Verbindungen L11 bis L42 als auch die verschiedenen Widerstandsbereiche R1 bis R4 und die zugehörigen Anschlußleiterbahnen L5 bis L8 durch Kathodenzerstäubung als Dünnschicht aufgebracht sind. Der Dehnungsmeßstreifen gemäß Figur 2 ist als einseitig im rechten Bereich der Darstellung auslenkbare Anordnung hergestellt, wodurch sich eine Dehnung der Widerstände R1 und R3 ergibt, während die Widerstände R2 und R4 bei Auslenkungen im wesentlichen unverändert bleiben.

Figur 3 stellt eine Anordnung eines Dünnschicht-Dehnungsmeßstreifens mit symmetrischem Aufbau dar, welcher sich zur zentralen Auslenkung eignet und beispielsweise im gestrichelt umgrenzten Bereich als dehnbare Membrane ausgebildet ist. Gleiche Teile tragen die gleichen Bezugszeichen wie in den Figuren 1 und 2. Die vier Dehnungsmeßstreifen der Brückenschaltung werden bei dieser Anordnung von zwei tangential gedehnten Widerständen R1 und R3 sowie von zwei in radialer Richtung gedehnten Widerständen R2 und R4 gebildet. Die niederohmigen Verbindungen L11 bis L42 und die Anschlußleiterbahnen L5 bis L8 sind der andersartigen Geometrie angepaßt und nach zwei verschiedenen Seiten herausgeführt. Durch die symmetrische Anordnung verursachen sie keine Meßfehler.

Bei den Anordnungen nach Figur 2 und Figur 3 liegen die Widerstands-Temperaturkoeffizienten (TKR) der verwendeten Widerstandsmaterialien für die dehnungsempfindlichen Widerstände R1 bis R4, die niederohmigen Verbindungen L11 bis L42 und die Anschlußleiterbahnen L5 bis L8 in der gleichen Größenordnung. Dabei bestehen die niederohmigen Verbindungen L11 bis L42 und die Anschlußleiterbahnen L5 bis L8 aus Konstantan, in welches beim Aufstäuben oder Aufdampfen Stickstoff und/oder Luft aus dem Restgas eingebaut worden ist. Für die dehnungsempfindlichen Widerstände R1 bis R4 eignen sich besonders Tantalnitrid ($Ta_2N$, $TaN$) und/oder Tantaloxinitrid ($TaO_xN_y$), welches ebenfalls beim Zerstäuben oder Aufdampfen von Tantal durch Reaktion mit Stickstoff und/oder Luft im Restgas hergestellt werden und etwa den gleichen Temperaturkoeffizienten wie das dotierte Konstantan besitzt. Die dehnungsempfindlichen Widerstände R1 bis R4 können auf eine dünne organische Folie aufgebracht sein, welche auf ein elastisch verformbares Federelement aufgeklebt wird, besonders wenn es sich um Federelemente mit nicht ebenen Oberflächen handelt. Auf die Darstellung des Federelementes ist in den Figuren 2 und 3 verzichtet worden, die Gestalt eines Federelementes, wie es beispielsweise für eine Anordnung gemäß Figur 2 verwendbar ist, zeigt die später noch näher zu erläuternde Figur 5.

Noch vorteilhafter als das Aufbringen der Dünnschicht-Dehnungsmeßstreifen auf dem Federelement mit Hilfe einer beschichteten Folie ist das direkte Aufdampfen oder Aufstäuben der Dünnschichten auf ein Federelement, welches dann vorher bereits mit einer Isolationsschicht versehen werden muß, ein Verfahren, welches sich besonders bei Federelementen mit nicht gekrümmter Oberfläche anbietet. Diese Isolationsschicht ist aus Figur 4 ersichtlich und dort mit I bezeichnet. Aus dem Schnitt nach der Linie IV-IV in Figur 2 ergibt sich die Anordnung gemäß Figur 4, wobei das als Substrat dienende Federelement mit S bezeichnet ist. Auf dem Federelement S liegt fest haftend die Isolationsschicht I, hierauf das Widerstandsmaterial R, R3 und über dem Widerstandsmaterial die Anschlußleiterbahn L7, im vorliegenden Fall aus Konstantan in entsprechender Breite und Dicke hergestellt, um einen ausreichend niedrigen Widerstand für die Anschlußleitung zu erzielen. Die Isolationsschicht I besteht aus einer porenfreien, dünnen, hochohmigen Glasisolationsschicht, welche unmittelbar auf das Federelement S, insbesondere auf eine Kupferberyllium (CuBe)-Federplatte aufgebracht ist.

Figur 5 veranschaulicht die Herstellung der einzelnen Dünnschicht-Dehnungsmeßelemente gemäß Figur 2. Die Einzelelemente werden aus einer Platte 11 herausgeteilt, welche zunächst die größere Fertigungseinheit darstellt. Die Platte 11 besteht aus CuBe-Federmaterial und hat in der in Figur 5 dargestellten Anordnung eine Größe von 3 Zoll x 3 Zoll, welche in der Dünnschichtmetallisierungstechnik und in der Fotoätztechnik üblich ist. Aus dieser Platte 11 lassen sich z.B. 16 etwa dreieckförmige Federelemente 10 herstellen. Das Trennen der Einzelelemente 10 voneinander erfolgt im Gegensatz zu dem bisher üblichen Trennätzen durch das wirtschaftlichere Verfahren des Trennstanzens, welches, obwohl grundsätzlich bekannt, beim Trennen derartiger Dünnschichtanordnungen wegen deren Sprödigkeit und wegen des befürchteten Ausschusses durch Beschädigungen beim Trennen bislang trotz seiner verfahrensmäßigen Vorteile nicht verwendet worden ist. Insbesondere entfallen beim Trennstanzen die Arbeitsschritte für einen weiteren Maskenätzprozeß, welcher beim Trennätzen den größten Mehraufwand darstellt. Das Trennstanzen erfolgt nach Durchführung aller Verarbeitungsschritte zur fertigen Meßbrücke. Hierbei ist es lediglich wichtig, daß die mit der Glasisolationsschicht I bedeckte Fläche und damit auch die Dünnschichtmetallisierung von allen gestanzten Rändern wenigstens 1 mm entfernt ist, was beim Siebdruckverfahren keine Schwierigkeiten verursacht.

Verfahrensmäßig hat es sich bei der Herstellung der Dünnschicht-Dehnungsmeßstreifen besonders bewährt, wenn auf eine auf das Federelement S aufgebrachte Isolationszwischenschicht I ganzflächig zunächst eine Widerstandsschicht R und anschließend eine leitfähige Schicht L aus Widerstandsmaterial, vorzugsweise aus Konstantan, aufgebracht wird. Diese Schichten können aufgedampft oder aufgestäubt werden, die folgenden Angaben der Beschreibung beziehen sich auf eine Schicht, welche durch Kathodenzerstäubung hergestellt worden ist. Bei der weiteren Bearbeitung zu den fertigen Dehnungsmeßstreifen gemäß Figur 2 oder Figur 3 wird zunächst in einem ersten Ätzschritt die Gesamtstruktur der Widerstands- und Leiterbahnbereiche erzeugt und anschließend in einem zweiten Ätzschritt das Leiterbahnmaterial selektiv von den Widerstandsbereichen abgeätzt. Ist das Substrat eine Folie, welche auf das Federelement nachträglich aufgebracht wird, dann empfiehlt es sich, diese vor der Metallisierung reversibel auf einem stabilen Träger, z.B. einer Glasplatte, aufzubringen, damit nach der Metallisierung einfach der Fotoätzprozeß durchgeführt werden kann. Die Leiterbahnbereiche L11 bis L42 und L5 bis L8 werden aus mit Stickstoff und/oder Luft dotiertem Konstantan in einem reaktiven Aufstäubverfahren in einer Argonatmosphäre als Entladungsgas aufgebracht, welches mit Stickstoff und/oder Luft vermischt ist. Im gleichen Prozeß erfolgt einerseits die Umwandlung des Kathodenmaterials Tantal zu Tantalnitrid ($Ta_2N$, $TaN$) oder gegebenenfalls zu Tantaloxinitrid ($TaO_xN_y$), welches die Widerstandsschicht bildet, und darüber hinaus anschließend in der gleichen, mit Stickstoff und/oder Luft dotierten Atmosphäre die Herstellung der Leiterbahnabschnitte. Letztere bestehen aus mit Stickstoff und/oder Luft dotiertem Konstantan, welches auf diese Weise einen Temperaturkoeffizienten erhält, der etwa gleich dem Temperaturkoeffizienten der Widerstandsschicht ist. Während reines Konstantan einen Temperaturkoeffizienten von etwa -10 ppm/°K besitzt hat das z.B. mit 1 % Stickstoff im Entladungsgas aufgestäubte Konstantan einen Temperaturkoeffizienten von -80 ppm/°K, welcher dem Temperaturkoeffizienten der unter dieser Entladungszusammensetzung aufgestäubten Tantalnitridschicht für die Widerstände entspricht. Es erfolgt also das Aufbringem der Widerstandsschicht R und der Leiterbahnschicht L im gleichen reaktiven Vakuumzyklus. So können z.B. in einer Hochfrequenz-Zerstäubungsanlage zwei verschiedene Kathoden aus Tantal und Konstantan gleichzeitig abgestäubt werden und die zu beschichtenden Federelemente mit Hilfe eines Transportmechanismus zunächst an der Tantaldann an der Konstantan-Kathode vorbeigeführt werden. Mit Hilfe der Kathodengröße und damit umterschiedlicher Aufstäubraten und Aufstäubzeiten werden die gewünschten Dickenverhältnisse realisiert, wobei gleichzeitig mit dem Aufstäuben der Konstantan-Schicht eine thermische Voralterung der Widerstandsschicht aus Tantalnitrid oder Tantaloxinitrid erfolgt.

Die Isolationsschicht I wird aus wenigstens zwei nacheinander nach Art eines Mehrfachdruckes im Siebdruckverfahren aufgebrachten und anschließend eingebrannten Glasschichten hergestellt. Durch zwei oder mehr getrennte Siebdruckprozesse erreicht man eine porenfreie Isolationsschicht I ohne Vorbehandlung des darunterliegenden Federelementes S. Beim Einbrennen der Glas- Isolationsschicht I wird darüber hinaus ohne Mehraufwand eine Härtung des Federelementes S erreicht.

Die Konstantanschicht für die Leiterbahnbereiche L11 bis L42 und L5 bis L8 hat einen ausreichenden Querschnitt, um die erforderliche Leitfähigkeit sicherzustellen. Die Anordnung in Figur 4 zeigt schematisch die Größenverhältnisse: Auf ein elastisch verformbares Substrat mit einer Dicke in der Größenordnung von einigen 100 µm ist zunächst festhaftend die Glas-Isolationsschicht I mit einer Dicke von 15 bis 50 µm aufgedruckt. Die Widerstandsschicht aus z.B. Tantalnitrid liegt in einem Dickenbereich $\leqslant$ 0,1 µm, während die darüberliegenden Konstantanschicht eine Dicke von ca. 0,2 bis 0,5 µm aufweist. Diese Größen müssen selbstverständlich den jeweiligen Verwendungsfällen angepaßt werden. Durch den erfindungsgemäßen Aufbau der Dünnschicht-Dehnungsmeßstreifen wird also eine scheinbare Dehnung der Meßwiderstände bei veränderlicher Temperatur unterdrückt. Durch die Verschaltung der verschiedenen Widerstände in einer Meßbrücke wird außerdem die ausschließlich durch Wärmedehnung des Federelementes verursachte und damit fehlerhafte Widerstandsveränderung kompensiert.

Neben den bereits aufgeführten Vorteilen der vorgeschlagenen Schichtkombination ist schließlich noch als sehr günstig herauszustellen, daß bei Ätzrückständen der Konstantanschicht auf der Meßwiderstandsschicht, verursacht beispielsweise durch einen Fehler in der Belichtungsmaske beim Fotoätzen, der Meßwiderstand in seinem Temperaturkoeffizienten nicht von den anderen, rückstandsfreien Brückenwiderständen abweicht. Bei bisher eingesetzten Kontaktschichten führte das zum Ausschluß der Brücke von Präzisionsmessungen bei veränderlicher Umgebungstemperatur, obwohl die Brückenwiderstände abgeglichen waren.

**Patentansprüche**

1. Dünnschicht-Dehnungsmeßstreifen zur Messung von Kraft, Druck, Weg, Gewicht oder Beschleunigung, mit einem elastisch verformbaren Federelement (10, S) in Verbindung mit wenigstens einem dehnungsempfindlichen Widerstand, vorzugsweise mit vier zu einer Wheatstone-Brücke zusammengeschalteten dehnungsempfindlichen Widerständen (R1 bis R4), dadurch gekennzeichnet, daß der Widerstands-Temperaturkoeffizient der verwendeten Widerstandsmaterialien für die Widerstandsschicht (R1 bis R4) und die niederohmigen Verbindungen (L11 bis L42) und/oder die Anschlußleiterbahnen (L5 bis L8) in der gleichen Größenordnung liegt und daß die niederohmigen Verbindungen (L11 bis L42) und/oder die Anschlußleiterbahnen (L5 bis L8) aus Widerstandsmaterial bestehen, welches von dem Widerstandsmaterial des eigentlichen Widerstandes (R1 bis R4) verschieden ist.

2. Dehnungsmeßstreifen nach Anspruch 1, dadurch gekennzeichnet, daß die niederohmigen Verbindungen (L11 bis L42) und/oder die Anschlußleiterbahnen (L5 bis L8) aus mit Stickstoff dotiertem Konstantan bestehen.

3. Dehnungsmeßstreifen nach Anspruch 1 oder 2, dadurch gekennzeichnet, daß der/die dehnungsempfindliche(n) Widerstand/Widerstände (R1 bis R4) aus Tantalnitrid und/oder Tantaloxinitrid besteht/bestehen.

4. Dehnungsmeßstreifen nach einem der vorhergehenden Ansprüche, dadurch gekennzeichnet, daß der/die dehnungsempfindliche(n) Widerstand/Widerstände (R1 bis R4) auf eine dünne organische Folie aufgebracht ist/sind, welche auf ein elastisch verformbares Federelement (10) aufgeklebt ist.

5. Dehnungsmeßstreifen nach einem der Ansprüche 1 bis 3, dadurch gekennzeichnet, daß der/die dehnungsempfindliche(n) Widerstand/Widerstände (R1 bis R4) unter Einfügung einer Isolationsschicht (I) auf das Federelement (10, S) aufgedampft oder aufgestäubt ist/sind.

6. Dehnungsmeßstreifen nach einem der vorhergehenden Ansprüche, dadurch gekennzeichnet, daß die dehnungsempfindlichen Widerstände (R1 bis R4) einer Wheatstone-Brücke in rechteckiger Anordnung mit zwei beim Meßvorgang gedehnten (R1, R3) und zwei beim Meßvorgang ungedehnten (R2, R4) Widerstandsbereichen auf ein einseitig auslenkbares Federelement (10) aufgebracht sind.

7. Dehnungsmeßstreifen nach einem der vorhergehenden Ansprüche, dadurch gekennzeichnet, daß die dehnungsempfindlichen Widerstände (R1 bis R4) einer Wheatstone-Brücke mit zwei beim Meßvorgang tangential gedehnten, etwa halbkreisförmigen Widerstandsbereichen (R1, R3) und mit zwei beim Meßvorgang radial gedehnten, etwa U-förmigen Widerstandsbereichen (R2, R4) auf einer Rundmembran aufgebracht sind.

8. Dehnungsmeßstreifen nach einem der vorhergehenden Ansprüche, dadurch gekennzeichnet, daß die dehnungsempfindlichen Widerstände (R1 bis R4) unter Zwischenlage einer porenfreien dünnen, hochohmigen Glasisolationsschicht (I) auf das Federelement (S), insbesondere auf eine CuBe-Federplatte, aufgebracht sind.

9. Verfahren zur Herstellung eines Dünnschicht-Dehnungsmeßstreifens nach einem der vorhergehenden Ansprüche, bei dem auf eine auf das Federelement (S) aufgebrachte Isolationszwischenschicht (I) ganzflächig zunächst eine Widerstandsschicht (R, R1 bis R4) und anschließend eine gut leitfähige Schicht (L, L11 bis L42, L5 bisL8) aus Widerstandsmaterial, vorzugsweise aus Konstantan, aufgedampft oder aufgestäubt werden, bei dem in einem ersten Ätzschritt zunächst die Gesamtstruktur der Widerstände und Leiter erzeugt wird und bei dem anschließend in einem zweiten Ätzschritt das gut leitfähige Material (L) selektiv von den Widerständen (R1 bis R4) abgeätzt wird.

10. Verfahren nach Anspruch 9, bei dem die Leiterbahnbereiche (L11 bis L42, L5 bis L8) aus mit Stickstoff und/oder Luft dotiertem Konstantan in einem reaktiven Aufstäubverfahren in mit Stickstoff und/oder Luft vermischtem Entladungsgas aufgebracht werden und bei dem hierbei die Entladungsgasdotierung so eingestellt und ein entsprechender Anteil Stickstoff und/oder Luft in die Konstantanschicht eingebaut wird, daß der Widerstands-Temperaturkoeffizient der mit Stickstoff und/oder Luft dotierten Konstantanschicht etwa gleich dem Widerstandstemperaturkoeffizienten der darunterliegenden Widerstandsschicht gemacht wird.

11. Verfahren nach Anspruch 10, bei dem die Widerstandsschicht (R) durch reaktives Aufdampfen oder Aufstäuben von Tantal in einer mit Stickstoff und/oder Luft dotierten Atmosphäre als Tantalnitrid oder Tantaloxinitrid hergestellt und in einem thermischen Prozeß vorgealtert wird.

12. Verfahren nach Anspruch 10 oder 11, bei dem das Aufbringen der Widerstandsschicht (R) und der Leiterbahnschicht (L) im gleichen reaktiven Vakuumzyklus einer Hochfrequenz-Aufstäubung mit zwei verschiedenen Kathoden und mit unterschiedlichen Aufstäubraten erfolgt.

13. Verfahren nach einem der Ansprüche 10 bis 12, bei dem die Isolationsschicht (I) aus wenigstens zwei nacheinander nach Art eines Mehrfachdruckes im Siebdruckverfahren aufgebrachten und anschließend einzeln eingebrannten Glasschichten hergestellt wird.

14. Verfahren nach Anspruch 13, bei dem das Federelement (10, S) beim Einbrennen der Glas-Isolationsschicht (I) gehärtet wird.

15. Verfahren zur Herstellung eines Dünnschicht-Dehnungsmeßstreifens nach einem der Ansprüche 9 bis 14 bei dem die Trennung von mehreren, auf einem Standard-Subtrat (11) erzeugten Einzelelementen (10) durch Ausstanzen nach Durchführung aller Bearbeitungsschritte erfolgt.

## Claims

1. Thin-film resistance strain gauge for measuring force, pressure, distance, weight or acceleration, comprising an elastically deformable spring element (10, S) in connection with at least one strain-sensitive resistor, preferably with four strain-sensitive resistors (R1 to R4) connected together to form a Wheatstone bridge, characterized in that the temperature coefficient of resistance of the resistance materials used for the resistance layer (R1 to R4) and the low-resistance connections (L11 to L42) and/or the connecting conductor tracks (L5 to L8) is of the same order of magnitude and that the low-resistance connections (L11 to L42) and/or the connecting conductor tracks (L5 to L8) consist of resistance material which is different from the resistance material of the actual resistor (R1 to R4).

2. Resistance strain gauge according to Claim 1, characterized in that the low-resistance connections (L11 to L42) and/or the connecting conductor tracks (L5 to L8) consist of constantan doped with nitrogen.

3. Resistance strain gauge according to Claim 1 or 2, characterized in that the strain-sensitive resistor/resistors (R1 to R4) consists/consist of tantalum nitride and/ or tantalum oxi-nitride.

4. Resistance strain gauge according to one of the preceding claims, characterized in that the strain-sensitive resistor/resistors (R1 to R4) is/are applied to a thin organic foil which is bonded to an elastically deformable spring element (10).

5. Resistance strain gauge according to one of Claims 1 to 3, characterized in that the strain-sensitive resistor/resistors (R1 to R4) is/are vapour-deposited or sputtered onto the spring element (10, S) with insertion of an insulating layer (I).

6. Resistance strain gauge according to one of the preceding claims, characterized in that the strain-sensitive resistors (R1 to R4) of a Wheatstone bridge are applied in rectangular arrangement, containing two resistance areas (R1, R3) which are strained during the measuring process and two resistance areas (R2, R4) which are unstrained during the measuring process, to a unilaterally deflectable spring element (10).

7. Resistance strain gauge according to one of the preceding claims, characterized in that the strain-sensitive resistors (R1 to R4) of a Wheatstone bridge are applied to a round membrane and comprise two approximately semicircular resistance areas (R1, R3) which are tangentially strained during the measuring process and two approximately U-shaped resistance areas (R2, R4) which are radially strained during the measuring process.

8. Resistance strain gauge according to one of the preceding claims, characterized in that the strain-sensitive resistors (R1 to R4) are applied to the spring element (S), in particular to a CuBe spring plate, with interposition of a non-porous, thin, high-resistance glass insulation layer (I).

9. Method for producing a thin-film resistance strain gauge according to one of the preceding claims, in which method initially a resistance layer (R, R1 to R4) and subsequently a highly conductive layer (L, L11 to L42, L5 to L8) of resistance material, preferably of constantan is vapour-deposited or sputtered onto the entire area of an intermediate insulation layer (I) applied to the spring element (S), in which method first the overall structure of the resistors and conductors is generated in a first etching step and in which method the highly conductive material (L) is subsequently selectively etched away from the resistors (RI to R4) in a second etching step.

10. Method according to Claim 9, in which method the conductor track areas (L11 to L42, L5 to L8) of constantan doped with nitrogen and/or air are applied in a reactive sputtering process in discharge gas mixed with nitrogen and/or air and in which method, during this process, the discharge-gas doping is adjusted in such a manner and a corresponding proportion of nitrogen and/or air is incorporated in the constantan layer in such a manner that the resistance temperature coefficient of the constantan layer doped with nitrogen and/or air is made to be approximately equal to the resistance temperature coefficient of the underlying resistance layer.

11. Method according to Claim 10, in which method the resistance layer (R) is produced as tantalum nitride or tantalum oxi-nitride by reactive vapour-deposition or sputtering of tantalum in an atmosphere doped with nitrogen and/or air and is pre-aged in a thermal process.

12. Method according to Claim 10 or 11, in which method the resistance layer (R) and the conductor track layer (L) are applied in the same reactive vacuum cycle of a high-frequency sputtering process utilising two different cathodes and different sputtering rates.

13. Method according to one of Claims 10 to 12, in which method the insulation layer (I) is produced from at least two glass layers which are successively applied in the manner of a multicolour print in a screen-printing process and are then individually burnt in.

14. Method according to Claim 13 in which method the spring element (10, S) is hardened during the burning-in of the glass insulation layer (I).

15. Method for producing a thin-film resistance strain gauge according to one of Claims 9 to 14, in which method several individual elements (10) generated on a standard substrate (11) are separated by being stamped out after all processing steps have been carried out.

**Revendications**

1. Jauge de contrainte en couche mince pour la mesure d'une force, d'une pression, d'un déplacement, d'un poids ou d'une accélération, comportant un élément élastiquement deformable (10, S) en liaison avec au moins une résistance sensible à l'allongement, comportant de préférence quatre résistances (RI à R4) sensibles à l'allongement et montées pour donner un pont de Wheatstone, caractérisée en ce que le coefficient thermique de résistance des matériaux utilisés pour la couche résistante (RI à R4) et pour les liaisons à faible résistance (L11 à L42) et/ou pour les rubans de connexion (L5 à L8) se situent dans le même ordre de grandeur ; et en ce que les liaisons à faible résistance (L11 à L42) et/ou les rubans de connexion (L5 à L8) sont constitués d'un matériau résistant qui est différent du matériau résistant de la résistance proprement dite (R1 à R4).

2. Jauge de contrainte selon la revendication 1, caractérisée en ce que les liaisons à faible résistance (L11 à L42) et/ou les rubans de connexion (L5 à L8) sont constitués de constantan dopé à l'azote.

3. Jauge de contrainte selon la revendication 1 et la revendication 2, caractérisée en ce que la/les résistance/résistances (R1 à R4) sensible/sensibles à l'allongement est constituée/sont constituées de nitrure de tantale et/ou d'oxynitrure de tentale.

4. Jauge de contrainte selon l'une des revendications précédentes, caractérisée en ce que la/les résistance/résistances (RI àR4) sensible/sensibles à l'allongement est rapportée/sont rapportées sur une couche organique mince collée sur un élément élastiquement déformable (10).

5. Jauge de contrainte selon l'une des revendications 1 à 3, caractérisée en ce que la/les résistance/résistances (RI à R4) sensible/sensibles à l'allongement est déposée/sont déposées par vaporisation ou pulvérisation sur l'élément élastique (10, S) avec interposition d'une couche isolante (I).

6. Jauge de contrainte selon l'une des revendications précédentes, caractérisée en ce que les résistances (R1 à R4), sensibles à l'allongement, d'un pont de Wheatstone sont rapportées, selon une disposition rectangulaire, sur un élément élastique (10) qui peut devier d'un côté, deux zones résistantes (R1, R3) s'allongeant lors du processus de mesure et deux zones resistantes (R2, R4) ne s'allongeant pas lors du processus de mesure.

7. Jauge de contrainte selon l'une des revendications précédentes, caractérisée en ce que les résistances sensibles à l'allongement (R1 à R4) d'un pont de Wheatstone sont rapportées sur une membrane ronde, deux zones résistantes (R1, R3) de forme à peu pres semi circulaire, s'allongeant tangentiellement lors du processus de mesure et deux zones résistantes (R2, R4), en forme à peu pres en U, s'allongeant radialement lors du processus de mesure.

8. Jauge de ccntrainte selon l'une des revendications précédentes, caractérisée en ce que les résistances sensibles à l'allongement (R1 à R4) sont rapportées sur l'élément élastique (S), en particulier sur une plaque élastique en CuBe, avec interposition d'une couche isolante en verre (I) sans pores, mince, de résistance élevée.

9. Procédé pour la fabrication d'une jauge de contrainte en couche mince selon l'une des revendications précédentes, dans lequel, sur une couche intermédiaire isolante (I) rapportée sur l'élément élastique (S) sont déposées, par vaporisation ou par pulvérisation, sur toute la surface, d'abord une couche résistante (R, R1 à R4) et ensuite une couche bonne conductrice (L,

L11 à L42, L5 à L8), de matériau résistant, de préférence de constantan ; dans lequel on produit tout d'abord, dans une première étape de décapage, la structure totale des résistances et des conducteurs ; et dans lequel, dans une deuxieme étape de décapage, on sépare ensuite sélectivement, par décapage, le matériau bon conducteur (L), d'avec les résistances (R1 à R4).

10. Procédé selon la revendication 9, dans lequel les zones formant les rubans conducteurs (L11 à L42, L5 à L8) sont rapportées, dans un procédé réactif de dépôt par pulvérisation, à partir d'un constantan dopé à l'azote et/ou à l'air dans un gaz de décharge mellangé d'azote et/ou d'air ; et dans lequel on regle le dopage du gaz de décharge et on introduit une proportion correspondante d'azote et/ ou d'air dans la couche de constantan de façon que le coefficient thermique de résistance de la couche de constantan dopée à l'azote et/ou à l'air soit rendu à peu près égal au coefficient thermique de la couche résistante sous-jacente.

11. Procédé selon la revendication 10, dans lequel la couche résistante (R) est fabriquée par dépôt réactif de tantale, par vaporisation ou par pulvérisation, en atmosphère dopée à l'azote et/ou à l'air, sous forme de nitrure de tantale ou d'oxynitrure de tantale puis prévieillie dans un processus thermique.

12. Processus selon la revendication 10 ou la revendication 11, dans lequel l'application de la couche résistante (R) et de la couche formant rubans conducteurs (L) se font dans le même cycle réactif, sous vide, d'un dépôt par pulvérisation haute fréquence avec deux cathodes différentes et avec des vitesses différentes de dépôt de pulvérisation.

13. Procédé selon l'une des revendications 10 à 12, dans lequel la couche isolante (I) est constituée d'au moins deux couches de verre rapportées successivement, à la façon d'une impression multiple, dans le procédé de sérigraphie, puis brûlées individuellement.

14. Procédé selon la revendication 13, dans lequel l'élément élastique (10, S) est trempé lors du brûlage de la couche isolante en verre (I).

15. Procédé pour la fabrication d'une jauge de contrainte en couche mince selon l'une des revendications 9 à 14, dans lequel la séparation de plusieurs éléments individuels (10) produits sur un10) produits sur un substrat standard (11) se fait par décapage, après exécution de toutes les phases du traitement.

0 087 419

## FIG.1

## FIG. 2

1

## FIG. 3

## FIG. 4

FIG. 5